# FASCICULE DE BREVET EUROPEEN

(11) **EP 2 491 609 B1**
(45) Date de publication et mention de la délivrance du brevet: **12.02.2014**
(21) Numéro de dépôt: 10768015.9
(22) Date de dépôt: 18.10.2010
(51) Int. Cl.: H01M 8/04

(54) **PREVENTION DE LA CORROSION D'UNE PILE A COMBUSTIBLE**
KORROSIONSVERHINDERUNG IN EINER BRENNSTOFFZELLE
PREVENTING CORROSION IN A FUEL CELL

(30) Priorité: 19.10.2009 FR 0904997
(43) Date de publication de la demande: 29.08.2012
(73) Titulaire: Commissariat à l'Énergie Atomique et aux Énergies Alternatives, 75015 Paris (FR)
(72) Inventeur: ORIOL, Jean, F-94420 Le Plessis-Trévise (FR); FERNANDEZ, Eric, F-38760 Saint Paul de Varces (FR); ROSINI, Sébastien, F-38100 Grenoble (FR)
(74) Mandataire: Guérin, Jean-Philippe
(86) Numéro de dépôt international: PCT/EP2010/065655
(87) Numéro de publication internationale: WO 2011/048057

(56) Documents cités:
- WO-A2-2005/107360
- KR-A- 20100 071 712
- US-A1- 2008 044 694

## Description

L'invention concerne les piles à combustible, et en particulier la prévention de la corrosion lors de phases d'extinction d'une pile à combustible.

Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 1Volt, et leur empilement permet de générer une tension d'alimentation d'un niveau plus élevé, par exemple de l'ordre d'une centaine de volts. Parmi les types de piles à combustible connus, on peut notamment citer la pile à combustible à membrane d'échange de protons, dite PEM. Chaque cellule comprend une membrane permettant seulement le passage de protons entre une anode et une cathode, et bloquant le passage de gaz. La pile à combustible peut comprendre plusieurs plaques d'écoulement, par exemple en graphite, empilées les unes sur les autres, chaque plaque étant associée à plusieurs cellules de l'empilement. Les plaques peuvent comprendre des canaux et orifices pour guider les réactifs et les produits à travers l'empilement. Au niveau de l'anode, du dihydrogène utilisé comme carburant est ionisé pour produire des protons traversant la membrane. Les électrons produits par cette réaction traversent un circuit électrique externe à la cellule pour former un courant électrique. Au niveau de la cathode, de l'oxygène est réduit et réagit avec les protons pour former de l'eau.

Il est connu que, les cellules de piles à combustible sont soumises à un risque de corrosion lors de leur extinction. En effet, durant cette phase, si aucune charge électrique n'est connectée aux bornes de la pile à combustible, la présence d'air résiduel sur la cathode ainsi que la présence d'hydrogène résiduel sur l'anode peut induire des potentiels électriques inappropriés. De tels potentiels peuvent générer une oxydation et une corrosion d'un support carboné et d'un catalyseur platiné, à l'origine d'une dégradation de leurs performances. Ce phénomène est désigné par le terme de maturation d'Ostwald. Ce problème est d'autant plus gênant que l'utilisation de la pile à combustible implique une fréquence d'extinction de la pile élevée. Différentes solutions ont été proposées pour résoudre ce problème.

Selon une première méthode, on injecte un gaz inerte dans les cellules pour réaliser une purge à proximité de l'anode et de la cathode immédiatement après la déconnexion de la charge électrique. Une telle injection de gaz inerte permet à la fois de réduire la dégradation des performances des cellules et d'éviter l'apparition possible d'un mélange inflammable d'hydrogène et d'air pour des raisons de sécurité. Le brevet US5013617 décrit un tel procédé ainsi que la connexion d'une charge électrique aux bornes de l'empilement de la pile à combustible durant l'injection de gaz, afin d'abaisser rapidement le potentiel de la cathode des cellules à un niveau compris entre 0,3 et 0,7 V.

Cette méthode présente cependant des inconvénients. Cette méthode induit un encombrement important de la pile à combustible, ce qui s'avère gênant dans certaines applications telles que les applications automobiles ou des applications dans l'électronique grand public. De plus, cette méthode est inadaptée dans des applications présentant des extinctions et des démarrages fréquents, du fait du temps nécessaire au balayage.

Pour supprimer une variation rapide de tension dans chaque cellule d'une pile à combustible, le document US2007/0224482 propose de transférer des charges électriques entre chaque cellule et un dispositif de stockage d'énergie correspondant. Ceci permet un contrôle de tension pour chaque cellule et améliore la durée de vie de la pile à combustible.

Le document EP1450429 décrit une pile à combustible comprenant plusieurs cellules étagées par des séparateurs. Les cellules sont connectées à des résistances externes permettant chacune un écoulement de courant depuis chaque pile à combustible, de sorte que les problèmes de corrosion liés au carburant restant après l'extinction de la cellule soient résolus. Un interrupteur est disposé en série des résistances externes.

Le document KR 2010 0071712 divulgue un procédé de protection contre la corrosion d'un ensemble de cellules électrochimiques (C1, C2, C3) incluses dans une pile à combustible (10) durant une phase d'extinction de la pile, comprenant, pour chaque cellule, les étapes de mesurer la tension aux bornes de chacune des cellules à protéger; lorsque la tension mesurée pour une cellule est supérieure à un seuil de protection, décharger cette cellule dans une charge électrique (R) jusqu'au seuil de protection; lorsque la tension mesurée pour une cellule est inférieure audit seuil de protection, découpler cette cellule de la charge électrique.

Le document AT505914 décrit un procédé d'extinction d'une cellule de pile à combustible. La pile à combustible comprend plusieurs cellules, connectées en série. En service, au moins deux gaz réactifs sont conduits vers les cellules, et en fin de services, l'alimentation d'un des gaz est interrompue. Le gaz résiduel dans les cellules est consommé. La consommation du gaz résiduel est effectuée en connectant une charge électrique aux bornes des cellules.

La demande de brevet US2008/0032163 décrit un système de contrôle des phases d'extinction et de démarrage de la pile à combustible. Le système mesure la tension aux bornes d'un certain nombre de cellules, puis détermine la cellule présentant une tension maximale et la cellule présentant une tension minimale. Durant la phase d'extinction ou de démarrage, en fonction des tensions mesurées, le système connecte une charge électrique présentant une résistance plus ou moins importante aux bornes de l'empilement de la pile à combustible. Le système régule l'impédance de la charge électrique pour maintenir la tension aux bornes des cellules comprise entre un seuil minimal et un seuil maximal afin d'éviter leur dégradation.

Un tel système ne protège pas les cellules de façon optimale contre une détérioration.

L'invention vise à résoudre un ou plusieurs de ces inconvénients. L'invention porte ainsi sur un procédé de protection contre la corrosion d'un ensemble de cellules électrochimiques incluses dans une pile à combustible durant une phase d'extinction de la pile, comprenant les étapes de:
- mesurer la tension aux bornes de chacune des cellules à protéger ;
- lorsque la tension mesurée pour une cellule est supérieure à un seuil de protection, décharger cette cellule dans une charge électrique, de sorte que :
   - lorsque la tension mesurée pour une cellule est supérieure à un seuil intermédiaire supérieur au seuil de protection, décharger cette cellule dans une charge électrique ;
   - lorsque la tension mesurée pour une cellule est inférieure au seuil intermédiaire, découpler cette cellule de la charge électrique ;
   - poursuivre la décharge des cellules jusqu'au seuil de protection lorsque les tensions à leurs bornes sont toutes inférieures audit seuil intermédiaire ;
- lorsque la tension mesurée pour une cellule est inférieure audit seuil de protection, découpler cette cellule de la charge électrique.

Selon une variante, le procédé est appliqué à des cellules électrochimiques du type à membrane échangeuse de protons.

Selon encore une variante, la décharge des cellules est réalisée dans des charges électriques respectives dédiées.

Selon une autre variante, un ensemble de cellules à protéger est déchargé simultanément lorsque leurs tensions respectives sont supérieures audit seuil de protection.

Selon encore une autre variante, ledit seuil de protection est compris entre 0,2 et 0,6V.

Selon encore une variante, le procédé comprend la fixation itérative de seuils intermédiaires décroissants, la décharge d'une cellule lorsque sa tension mesurée est supérieure au seuil intermédiaire nouvellement fixé, le découplage d'une cellule de la charge électrique lorsque sa tension mesurée est inférieure au seuil intermédiaire nouvellement fixé.

L'invention porte également sur une pile à combustible, comprenant :
- un ensemble de cellules électrochimiques à protéger contre la corrosion ;
- un dispositif de mesure de la tension aux bornes de chacune desdites cellules ;
- un circuit de protection des cellules électrochimiques, apte à détecter une phase d'extinction de la pile à combustible, et apte, lors de la détection d'une phase d'extinction, à :
   - décharger dans une charge électrique chaque cellule dont la tension mesurée est supérieure à un seuil de protection, de sorte que :
   - lorsque la tension mesurée pour une cellule est supérieure à un seuil intermédiaire supérieur au seuil de protection, cette cellule est déchargée dans une charge électrique
   - lorsque la tension mesurée pour une cellule est inférieure au seuil intermédiaire, cette cellule est découplée de la charge électrique ;
   - la décharge des cellules est poursuivie jusqu'au seuil de protection lorsque les tensions à leurs bornes sont toutes inférieures audit seuil intermédiaire ;
   - découpler de la charge électrique chaque cellule dont la tension mesurée est inférieure audit seuil de protection.

Selon une variante, les cellules électrochimiques sont du type à membrane échangeuse de protons.

Selon encore une variante, l'ensemble des cellules électrochimiques forme un empilement connecté en série.

Selon une autre variante, le circuit de protection comporte une charge électrique et un interrupteur dédiés pour chacune desdites cellules, le circuit de protection fermant un interrupteur dédié pour décharger une cellule dans sa charge dédiée.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'une cellule de pile à combustible ;
- la figure 2 est une représentation schématique d'une pile à combustible associée à une charge électrique ;
- la figure 3 est une représentation schématique d'un circuit électronique de protection de la pile à combustible ;
- la figure 4 est un logigramme d'un exemple de fonctionnement du circuit électronique durant une phase d'extinction de la pile à combustible.

En pratique, durant les phases d'extinction d'une pile à combustible, la tension de chaque cellule décroît de façon indépendante. L'abaissement de la tension d'une cellule dépend des conditions de fonctionnement de la pile à combustible, de la teneur en eau, des gradients de pression des gaz, de la température locale, des matériaux employés et des phénomènes électrochimiques mis en oeuvre. Les niveaux initiaux de tension de chacune des cellules de la pile à combustible lors de l'extinction sont également distincts, notamment du fait de dispersions lors du processus de fabrication. Par conséquent, même si une décharge globale de l'empilement dans une charge électrique permet de protéger les cellules contre une corrosion due à une surtension, certaines cellules peuvent se retrouver à un niveau de tension trop bas durant la décharge. Ces cellules peuvent alors subir une détérioration. Si la décharge est interrompue alors que certaines cellules ont un niveau de tension encore trop élevé, ces cellules peuvent également subir une détérioration.

L'invention propose de protéger contre la corrosion un ensemble de cellules électrochimiques d'une pile à combustible durant la phase d'extinction de la pile. La tension aux bornes de chaque cellule à protéger est mesurée. Si la tension d'une cellule est supérieure à un seuil de protection, cette cellule est déchargée dans une charge électrique. Si la tension mesurée pour cette cellule est inférieure à ce seuil, la cellule est découplée de la charge électrique.

L'invention permet d'optimiser la décharge des cellules lors de l'extinction de la pile à combustible, en évitant à la fois une corrosion par de trop hautes tensions et une dégradation par de trop basses tensions. Les cellules à protéger présentent également un niveau de tension relativement homogène à la fin de la phase d'extinction.

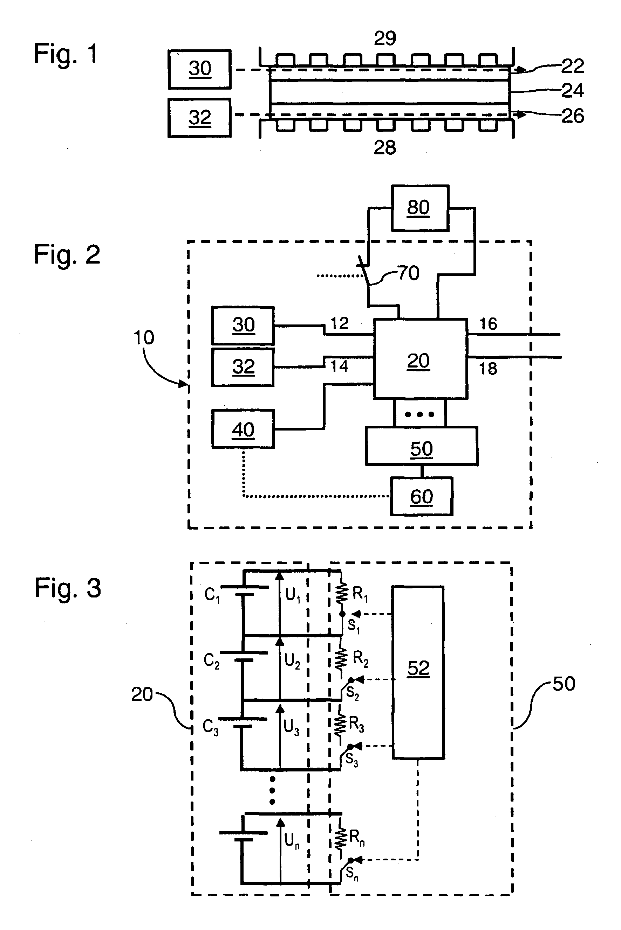

La figure 1 est une représentation schématique d'une cellule de piles à combustible à membrane échangeuse de protons ou membrane à électrolyte polymère (généralement désigné par l'acronyme PEM). La pile à combustible comprend une source de carburant 30 alimentant en dihydrogène une entrée de la cellule. La pile à combustible comprend également une source d'air 32 alimentant une entrée de la cellule en air, contenant de l'oxygène utilisé comme oxydant. La cellule comprend une anode 22, une cathode 26, et une couche d'électrolyte 24 placée entre l'anode et la cathode. L'anode 22 comprend usuellement une couche de diffusion de gaz, et une couche de catalyseur disposée entre cette couche de diffusion de gaz et l'électrolyte 24. La couche de diffusion de gaz sert a diffuser du gaz depuis un canal d'écoulement vers la couche de catalyseur. La couche de diffusion de gaz peut par exemple être réalisée de façon connue en soi sous forme de feutre ou tissu carboné sur lequel est fixé un agent hydrophobe tel que du polytétrafluoroéthylène. La couche de catalyseur de l'anode 22 comprend généralement du platine et du polytétrafluoroéthylène fixés sur un support carboné. Le polytétrafluoroéthylène est utilisé pour ses propriétés hydrophobes, le platine étant utilisé pour ses propriétés de catalyseur. La cathode 26 comprend usuellement une couche de diffusion de gaz, et une couche de catalyseur disposée entre cette couche de diffusion de gaz et l'électrolyte 24. La couche d'électrolyte 24 forme une membrane semi-perméable permettant une conduction protonique tout en étant imperméable aux gaz présents dans la cellule. La cellule présente par ailleurs une plaque de guidage d'écoulement d'anode 29 et une plaque de guidage d'écoulement de cathode 28, placées respectivement en vis-à-vis de l'anode 22 et de la cathode 26. Les plaques 28 et 29 sont par exemple réalisées en graphite de façon connue en soi.

Durant le fonctionnement de la pile à combustible, de l'air s'écoule entre l'électrolyte 24 et la plaque 28, et du dihydrogène s'écoule entre l'électrolyte 24 et la plaque 29. Au niveau de l'anode 22, le dihydrogène est ionisé pour produire des protons qui traversent l'électrolyte 24. Les électrons produits par cette réaction sont appliqués sur une charge électrique connectée à la pile à combustible pour former un courant électrique. Au niveau de la cathode, de l'oxygène est réduit et réagit avec les protons pour former de l'eau. Les réactions au niveau de l'anode et de la cathode sont régies comme suit :
H₂ → 2H⁺ + 2e⁻ au niveau de l'anode ;
4H⁺ + 4e⁻ + O₂ → 2H₂O au niveau de la cathode.

Durant son fonctionnement, une cellule génère usuellement une tension continue entre l'anode et la cathode de l'ordre de 1V.

La figure 2 est une représentation schématique d'une pile à combustible 10 destinée à alimenter une charge électrique 80. La pile à combustible 10 comprend un empilement de cellules telles que celle décrite à la figure 1. Ces cellules sont connectées électriquement en série, de sorte que l'empilement peut appliquer une tension d'un niveau approprié aux bornes de la charge 80.

La source de carburant 30 fournit sélectivement du dihydrogène sur une entrée 12 de l'empilement 20. La source d'air 32 fournit sélectivement de l'air sur une entrée 14 de l'empilement 20. L'empilement 20 présente une sortie 16 destinée à évacuer un excédent de dihydrogène et une sortie 18 destinée à évacuer de l'eau et de la chaleur générée par la réaction électrochimique.

Bien que non illustré, la pile à combustible 10 peut comprendre un système de refroidissement de l'empilement 20.

La pile à combustible 10 comprend un module de commande 60, par exemple mis en oeuvre par l'intermédiaire d'un microcontrôleur. La pile à combustible 10 comprend par ailleurs un module de protection de l'empilement contre la corrosion 50, un circuit de surveillance de la tension des cellules de l'empilement 40, et un interrupteur 70 permettant sélectivement d'accoupler électriquement l'empilement 20 à la charge 80. Le module de commande 60 commande le fonctionnement de l'interrupteur 70 et du module de protection 50. Le module de commande 60 est également connecté au circuit de surveillance 40 pour recevoir les niveaux de tension des cellules de l'empilement 20.

Lorsque la pile à combustible 10 est démarrée, la source de carburant 30 et la source d'air 32 alimentent alors l'empilement 20. Une tension électrique nominale est alors générée aux bornes de l'empilement 20. La commande 60 ferme l'interrupteur 70 de sorte que l'empilement 20 alimente électriquement la charge 80.

La figure 3 représente schématiquement un exemple de module de protection 50 connecté à l'empilement 20. Avantageusement, le module 50 comprend une résistance et un interrupteur dédiés à une cellule respective de l'empilement 20. Chaque cellule à protéger est ainsi connectée à une résistance et à un interrupteur dédiés du module 50. Ainsi, un interrupteur S1 et une résistance R1 sont connectés à la cellule C1, un interrupteur S2 et une résistance R2 sont connectés à la cellule C2 et un interrupteur S3 et une résistance R3 sont connectés à la cellule C3. Le module de protection 50 comprend par ailleurs un circuit de commande 52 commandant l'ouverture ou la fermeture des interrupteurs en fonction d'ordres transmis par le module de commande 60. Le circuit de commande 52 commande indépendamment l'ouverture ou la fermeture de l'ensemble des interrupteurs. Les interrupteurs peuvent être mis en oeuvre sous la forme de transistors intégrés dans un circuit du module de protection 50.

Lorsque la pile à combustible 10 est déjà démarrée et que les cellules sont alimentées en air et en combustible, le circuit de commande 52 maintient l'ensemble des interrupteurs ouverts pour éviter une dissipation de l'énergie produite par les cellules de l'empilement 20 dans les résistances du module de protection 50.

Durant une phase d'extinction de la pile à combustible 10, l'écoulement de carburant et d'air à travers l'empilement 20 est interrompu et l'interrupteur 70 est ouvert pour déconnecter la charge 80. Après la déconnexion de la charge 80, du dihydrogène et de l'air restent présents dans les cellules de l'empilement 20. La réaction électrochimique dans les cellules se poursuit transitoirement. La charge 80 étant déconnectée des cellules, des tensions d'anode et de cathode trop importantes peuvent être générées et peuvent induire une corrosion.

Pour protéger les cellules de l'empilement 20 contre la corrosion, le circuit de commande 52 ferme des interrupteurs dédiés afin que le courant électrique généré transitoirement soit dissipé dans les résistances dédiées du module 50.

Lors d'une extinction de la pile à combustible 10, le module de commande 60 procède à la protection des cellules de l'empilement 20 de la façon suivante. Le circuit de surveillance 40 mesure la tension aux bornes de chacune des cellules à protéger (de façon générale, toutes les cellules de l'empilement 20). Le circuit de surveillance 40 comprend typiquement un convertisseur analogique/numérique destiné à fournir les valeurs de tension des différentes cellules au microcontrôleur du module de commande 60. Chacune de ces tensions est comparée par le module de commande 60 à un seuil de tension de protection prédéfini. Ce seuil de tension correspond à un niveau en dessous duquel une cellule peut être maintenue sans risque de corrosion des matériaux la constituant. Pour chaque cellule dont la tension est supérieure au seuil de protection prédéfini, son interrupteur dédié est fermé pour permettre une décharge dans sa résistance dédiée. Le courant ainsi généré du fait de la présence de dihydrogène résiduel est dissipé par effet joule dans les résistances dédiées.

Lorsque le circuit de surveillance 40 mesure une tension d'une cellule inférieure au seuil prédéfini, l'interrupteur dédié de cette cellule est ouvert afin d'éviter un déchargement excessif de la cellule qui pourrait conduire à sa détérioration. Le seuil de protection est compris par exemple entre 0,2V et 0,6V.

Ainsi, la décharge des différentes cellules de l'empilement 20 est traitée indépendamment, ce qui permet de réaliser une extinction de la pile à combustible 10 sans risque de détérioration d'un ensemble de cellules dont certaines ont des tensions plus basses ou des vitesses de décharge plus élevées. L'extinction est ainsi réalisée de sorte que les cellules présentent toutes une tension finale optimale relativement homogène.

Par ailleurs, un tel procédé permet de consommer l'hydrogène résiduel dans les espaces anodiques des cellules. A contrario, une méthode de balayage de l'empilement avec un gaz inerte lors de l'extinction ne permet pas de purger l'ensemble de l'hydrogène résiduel restant par exemple contenu au niveau de la plaque de diffusion 29.

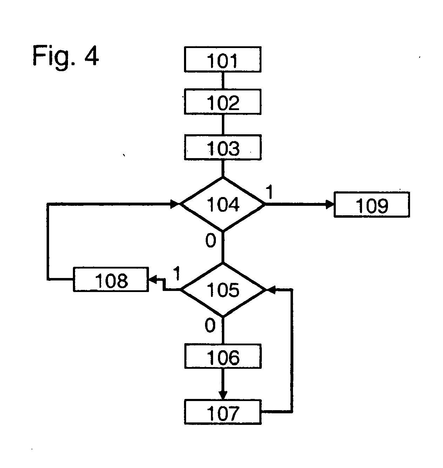

La figure 4 est un logigramme d'un premier exemple de mise en oeuvre d'un procédé de décharge des cellules selon l'invention. Selon ce procédé, la décharge des cellules est réalisée de façon étagée.

Lors d'une étape 101, on détecte le début d'une phase d'extinction de la pile à combustible 1. Lors d'une étape 102, on mesure la tension aux bornes de chacune des cellules. Lors d'une étape 103, on fixe un seuil intermédiaire de tension. Ce seuil pourra par exemple être fixé pour l'initialisation du logigramme à une valeur égale à 90 % de la tension mesurée pour la cellule présentant la tension maximale, ou à une valeur mémorisée au préalable. Lors d'une étape 104, on détermine si le seuil intermédiaire fixé est inférieur au seuil de protection. Le seuil de protection pourra par exemple être une valeur prédéfinie entre 0,2 et 0,6V. Si le seuil intermédiaire fixé est inférieur au seuil de protection, cela signifie que la décharge des différentes cellules de l'empilement est suffisante pour assurer leur protection, le logigramme passant alors à l'étape 109 pour interrompre le processus de décharge.

Si le seuil intermédiaire fixé est supérieur au seuil de protection, on détermine à l'étape 105 si toutes les tensions de cellules sont inférieures au seuil intermédiaire. Si tel est le cas, les cellules ont bien été déchargées jusqu'au seuil intermédiaire. Le seuil intermédiaire est alors décrémenté à l'étape 108, avant de repasser à l'étape 104. Si au moins une cellule a une tension supérieure au seuil intermédiaire, on passe à l'étape 106. A l'étape 106, l'interrupteur dédié des cellules dont la tension est supérieure au seuil intermédiaire est fermé. Ces cellules se déchargent ainsi. On ouvre l'interrupteur dédié des cellules dont la tension est inférieure au seuil intermédiaire, empêchant la décharge de ces cellules. A l'étape 107, on mesure la tension de l'ensemble des cellules, puis on repasse à l'étape 105.

Ce procédé itératif permet de décharger progressivement l'ensemble des cellules jusqu'au seuil de protection. Ce procédé utilise des charges dédiées d'impédances constantes, les décharges des différentes cellules étant réalisées en conséquence au moyen de durées de décharges distinctes.

Ce procédé permet de descendre pas à pas la tension des cellules jusqu'au seuil de protection. Un tel procédé de décharge permet de différencier le temps de décharge des différentes cellules en fonction de leur charge initiale. Ainsi, on évite de réaliser un appel de courant fort risquant de détériorer une cellule, lorsque cette cellule ne présente qu'une charge faible.

## Revendications

1. Procédé de protection contre la corrosion d'un ensemble de cellules électrochimiques (C1,C2,C3) incluses dans une pile à combustible (10) durant une phase d'extinction de la pile, comprenant les étapes de :
- mesurer (40) la tension aux bornes de chacune des cellules à protéger ;
- lorsque la tension mesurée pour une cellule est supérieure à un seuil de protection, décharger (50) cette cellule dans une charge électrique (R1,R2,R3), de sorte que:
- lorsque la tension mesurée pour une cellule est supérieure à un seuil intermédiaire supérieur au seuil de protection, décharger cette cellule dans une charge électrique ;
- lorsque la tension mesurée pour une cellule est inférieure au seuil intermédiaire, découpler cette cellule de la charge électrique ;
- poursuivre la décharge des cellules jusqu'au seuil de protection lorsque les tensions à leurs bornes sont toutes inférieures audit seuil intermédiaire ;
- lorsque la tension mesurée pour une cellule est inférieure audit seuil de protection, découpler cette cellule de la charge électrique.

2. Procédé de protection selon la revendication 1, appliqué à des cellules électrochimiques du type à membrane échangeuse de protons.

3. Procédé de protection selon la revendication 1 ou 2, dans lequel la décharge des cellules est réalisée dans des charges électriques respectives dédiées (R1, R2,R3).

4. Procédé de protection selon l'une quelconque des revendications précédentes, dans lequel un ensemble de cellules à protéger est déchargé simultanément lorsque leurs tensions respectives sont supérieures audit seuil de protection.

5. Procédé de protection selon l'une quelconque des revendications précédentes, dans lequel ledit seuil de protection est compris entre 0,2 et 0,6V.

6. Procédé de protection selon l'une quelconque des revendications précédentes, comprenant la fixation itérative de seuils intermédiaires décroissants, la décharge d'une cellule lorsque sa tension mesurée est supérieure au seuil intermédiaire nouvellement fixé, le découplage d'une

7. Pile à combustible (10), **caractérisée en ce qu'**elle comprend :
- un ensemble de cellules électrochimiques à protéger contre la corrosion ;
- un dispositif de mesure (40) de la tension aux bornes de chacune desdites cellules ;
- un circuit de protection (50) des cellules électrochimiques, apte à détecter une phase d'extinction de la pile à combustible, et apte, lors de la détection d'une phase d'extinction, à :
- décharger dans une charge électrique chaque cellule dont la tension mesurée est supérieure à un seuil de protection, de sorte que :
- lorsque la tension mesurée pour une cellule est supérieure à un seuil intermédiaire supérieur au seuil de protection, cette cellule est déchargée dans une charge électrique ;
- lorsque la tension mesurée pour une cellule est inférieure au seuil intermédiaire, cette cellule est découplée de la charge électrique ;
- la décharge des cellules est poursuivie jusqu'au seuil de protection lorsque les tensions à leurs bornes sont toutes inférieures audit seuil intermédiaire ;
- découpler de la charge électrique chaque cellule dont la tension mesurée est inférieure audit seuil de protection.

8. Pile à combustible (10) selon la revendication 7, dans laquelle les cellules électrochimiques sont du type à membrane échangeuse de protons.

9. Pile à combustible (10) selon la revendication 7 ou 8, dans laquelle l'ensemble des cellules électrochimiques forme un empilement (20) connecté en série.

10. Pile à combustible (10) selon l'une quelconque des revendications 7 à 9, dans laquelle le circuit de protection (50) comporte une charge électrique (R1, R2, R3) et un interrupteur (S1, S2, S3) dédiés pour chacune desdites cellules, le circuit de protection (50) fermant un interrupteur dédié pour décharger une cellule dans sa charge dédiée.

## Patentansprüche

1. Verfahren zum Korrosionsschutz einer Einheit von elektrochemischen Zellen (C1, C2, C3), die in einer Brennstoffzelle (10) eingeschlossen sind, während einer Löschphase der Zelle, umfassend die folgenden Schritte:
- Messen (40) der Spannung an den Klemmen jeder der zu schützenden Zellen;
- wenn die gemessene Spannung für eine Zelle größer als eine Schutzschwelle ist, Entladen (50) dieser Zelle in eine elektrische Ladung (R1, R2, R3), so dass:
- wenn die gemessene Spannung für eine Zelle größer als eine Zwischenschwelle ist, die größer als die Schutzschwelle ist, Entladen dieser Zelle in eine elektrische Ladung;
- wenn die gemessene Spannung für eine Zelle kleiner als die Zwischenschwelle ist, Entkoppeln dieser Zelle von der elektrischen Ladung;
- Fortsetzen des Entladens der Zellen bis zur Schutzschwelle, wenn die Spannungen an ihren Klemmen alle kleiner als die Zwischenschwelle sind;
- wenn die gemessene Spannung für eine Zelle kleiner als die Schutzschwelle ist, Entkoppeln dieser Zelle von der elektrischen Ladung.

2. Schutzverfahren nach Anspruch 1, das für elektrochemische Zellen des Typs mit Protonenaustauschmembran angewandt wird.

3. Schutzverfahren nach Anspruch 1 oder 2, bei dem die Entladung der Zellen in jeweilige speziell dazu vorgesehene elektrische Ladungen (R1, R2, R3) erfolgt.

4. Schutzverfahren nach einem der vorhergehenden Ansprüche, bei dem eine Einheit von zu schützenden Zellen gleichzeitig entladen wird, wenn ihre jeweiligen Spannungen größer als die Schutzschwelle sind.

5. Schutzverfahren nach einem der vorhergehenden Ansprüche, bei dem die Schutzschwelle zwischen 0,2 und 0,6 V beträgt.

6. Schutzverfahren nach einem der vorhergehenden Ansprüche, umfassend die iterative Festlegung von abnehmenden Zwischenschwellen, die Entladung einer Zelle, wenn ihre gemessene Spannung größer als die neu festgelegte Zwischenspannung ist, die Entkopplung einer Zelle von der elektrischen Ladung, wenn ihre gemessene Spannung kleiner als die neu festgelegte Zwischenspannung ist.

7. Brennstoffzelle (10), **dadurch gekennzeichnet, dass** sie Folgendes umfasst:
- eine Einheit von elektrochemischen Zellen, die gegen Korrosion zu schützen sind;
- eine Vorrichtung (40) zum Messen der Spannung an den Klemmen jeder der Zellen;
- eine Schutzschaltung (50) für die elektrochemischen Zellen, die geeignet ist, eine Löschphase der Brennstoffzelle zu erfassen, und die geeignet ist, bei der Erfassung einer Löschphase:
- jede Zelle, deren gemessene Spannung größer als eine Schutzschwelle ist, in eine elektrische Ladung zu entladen, so dass:
- wenn die gemessene Spannung für eine Zelle größer als eine Zwischenschwelle ist, die größer als die Schutzschwelle ist, diese Zelle in eine elektrische Ladung entladen wird;
- wenn die gemessene Spannung für eine Zelle kleiner als die Zwischenschwelle ist, diese Zelle von der elektrischen Ladung entkoppelt wird;
- das Entladen der Zellen bis zur Schutzschwelle fortgesetzt wird, wenn die Spannungen an ihren Klemmen alle kleiner als die Zwischenschwelle sind;
- jede Zelle, deren gemessene Spannung kleiner als die Schutzschwelle ist, von der elektrischen Ladung zu entkoppeln.

8. Brennstoffzelle (10) nach Anspruch 7, bei der die elektrochemischen Zellen vom Typ mit Protonenaustauschmembran sind.

9. Brennstoffzelle (10) nach Anspruch 7 oder 8, bei der die Einheit der elektrochemischen Zellen eine in Serie angeschlossene Stapelung (20) bildet.

10. Brennstoffzelle (10) nach einem der Ansprüche 7 bis 9, bei der die Schutzschaltung (50) eine elektrische Ladung (R1, R2, R3) und einen Schalter (S1, S2, S3) umfasst, die für jede der Zellen bestimmt sind, wobei die Schutzschaltung (50) einen Schalter, der für die Entladung der Zelle in seine spezielle Ladung bestimmt ist, umfasst.

## Claims

1. A method of protecting a set of electrochemical cells (C1, C2, C3) included in a fuel cell (10) from corrosion during a cell extinction phase, comprising the steps of:
- measuring (40) the voltage at the terminals of each of the cells to be protected;
- when the voltage measured for a cell is greater than a protective threshold, discharging (50) this cell into an electrical load (R1, R2, R3) such that:
- when the voltage measured for a cell is greater than an intermediate threshold greater than the protective threshold, discharge this cell into an electrical load;
- when the voltage measured for a cell is lower than the intermediate threshold, disconnect this cell from the electrical load;
- continue to discharge the cells to the protective threshold when the voltages at their terminals are all lower than said intermediate threshold;
- when the voltage measured for a cell is lower than said protective threshold, disconnect this cell from the electrical load.

2. The protection method according to claim 1, applied to proton exchange membrane type electrochemical cells.

3. The protection method according to claim 1 or 2, in which the cell discharge is carried out in respective dedicated electrical loads (R1, R2, R3).

4. The protection method according to any one of the previous claims, in which a set of cells to be protected is discharged simultaneously when their respective voltages are greater than said protective threshold.

5. The protection method according to any one of the previous claims, in which said protective threshold is between 0.2 and 0.6 V.

6. The protection method according to any one of the previous claims, comprising the iterative setting of decreasing intermediate thresholds, the discharge of a cell when its measured voltage is greater than the newly set intermediate threshold, the disconnection of a cell from the electrical load when its measured voltage is lower than the newly set intermediate voltage.

7. A fuel cell (10) **characterized in that** the cell comprises:
- a set of electrochemical cells to be protected against corrosion;
- a device (40) for measuring voltage at the terminals of each of said cells;
- a circuit (50) for protecting the electrochemical cells, capable of detecting an extinction phase of the fuel cell and capable, when detecting an extinction phase, of:
- discharging in an electrical load each cell with a measured voltage greater than a protective threshold, such that:
- when the measured voltage for a cell is greater than an intermediate threshold greater than the protective threshold, this cell is discharged into an electrical load;
- when the measured voltage for a cell is lower than the intermediate threshold, this cell is disconnected from the electrical load;
- the discharge of cells is continued to the protective threshold when the voltages at their terminals are all lower than said intermediate threshold;
- disconnecting from the electrical load each cell with a measured voltage lower than said protective threshold.

8. The fuel cell (10) according to claim 7, in which the electrochemical cells are of the proton exchange membrane type.

9. The fuel cell (10) according to claim 7 or 8, in which the set of electrochemical cells forms a stack (20) of cells connected in series.

10. The fuel cell (10) according to any one of claims 7 to 9, in which the protective circuit (50) comprises an electrical load (R1, R2, R3) and a switch (S1, S2, S3) dedicated to each of said cells, the protective circuit (50) closing a dedicated switch to discharge a cell into its dedicated load.
